# EUROPÄISCHE PATENTSCHRIFT

(11) **EP 3 883 349 B1**
(45) Veröffentlichungstag und Bekanntmachung des Hinweises auf die Patenterteilung: **17.09.2025**
(21) Anmeldenummer: 21162668.4
(22) Anmeldetag: 15.03.2021
(51) Int. Cl.: H05B 47/11, H05B 47/115, H05B 45/30, H05B 47/19

(54) **FUNKTIONSVORRICHTUNGEN UND LEUCHTVORRICHTUNG**
FUNCTIONAL DEVICES AND LIGHTING DEVICE
DISPOSITIFS FONCTIONNELS ET DISPOSITIF D'ÉCLAIRAGE

(30) Priorität: 20.03.2020 DE 102020107710
(43) Veröffentlichungstag der Anmeldung: 22.09.2021
(73) Patentinhaber: micas AG, 09376 Oelsnitz/Erzgebirge (DE)
(72) Erfinder: Ebert, Mark, 09376 Oelsnitz / Erzgebirge (DE); Fritzsche, Michael, 09221 Neukirchen / Erzgebirge (DE)
(74) Vertreter: Steiniger, Carmen

(56) Entgegenhaltungen:
- DE-U1- 20 309 033
- US-A1- 2011 193 491

## Beschreibung

Die vorliegende Erfindung betrifft ein Funktionsmodul mit Funktionsvorrichtungen, die wenigstens einen Bewegungs-, Präsenz- und/oder Helligkeitssensor, wenigstens eine Leuchten- oder Leuchtentreiber-Steuervorrichtung und wenigstens eine Drahtloskommunikationsvorrichtung aufweisen und die mit wenigstens einer LED und/oder einem LED-Treiber gekoppelt oder koppelbar sind.

Ferner betrifft die vorliegende Erfindung eine Leuchtvorrichtung mit wenigstens einer LED, einem LED-Treiber und Funktionsvorrichtungen, die wenigstens einen Bewegungs-, Präsenz- und/oder Helligkeitssensor, wenigstens eine Leuchten- oder Leuchtentreiber-Steuervorrichtung und wenigstens eine Drahtloskommunikationsvorrichtung aufweisen und die mit wenigstens einer LED und/oder einem LED-Treiber gekoppelt oder koppelbar sind.

In Leuchten werden zunehmend verschiedene Funktionsvorrichtungen integriert, um die Leuchten mit einer hohen Funktionalität auszustatten und zugleich einem Anwender die Einstellung individueller Lichtszenen zu ermöglichen. So können Leuchten unter anderem folgende Komponenten aufweisen:
- wenigstens ein Leuchtmittel, wie beispielsweise eine LED-Platine,
- einen LED-Treiber zur Ansteuerung des wenigstens einen Leuchtmittels und zur Wandlung der Netzspannung,
- Bewegungs- und Helligkeitssensoren zur Erfassung der Anwesenheit von Personen und einer Umgebungshelligkeit sowie
- eine Steuervorrichtung zur Steuerung des wenigstens einen Leuchtmittels, z. B. zur Integration der Leuchte in ein Lichtsteuersystem, zur drahtlosen Kommunikation der Leuchte mit anderen Leuchten und/oder zur Steuerung anwendungsspezifischer Lichtszenen.

In den aus dem Stand der Technik bekannten Leuchten sind diese unterschiedlichen Funktionsvorrichtungen als eigenständige Vorrichtungen mit eigener Stromversorgung und eigenem Gehäuse in die jeweilige Leuchte eingebracht. Eine Verbindung der einzelnen Funktionsvorrichtungen erfolgt mittels Standardschnittstellen, wie DALI (Digital Addressable Lighting Interface), SR (Sensor Ready), I2C (Inter-Integrated Circuit) oder 1-10V. Infolge der Vielzahl von unterschiedlichen Funktionsvorrichtungen mit eigener Stromversorgung und eigenem Gehäuse, welche in eine Leuchte zu integrieren sind, ist die Montage einer derartigen Leuchte insbesondere aufgrund der Befestigung der einzelnen Funktionsvorrichtungen im Inneren der Leuchte und der Verdrahtung der einzelnen Funktionsvorrichtungen miteinander sehr aufwändig. Zudem besteht bei der Montage einer derartigen Leuchte die Gefahr, dass einzelne der Funktionsvorrichtungen falsch miteinander verdrahtet werden oder die Verdrahtungen zwischen einzelnen Funktionsvorrichtungen brechen oder von einer Platine abreißen. Auch kann das Platzieren und Befestigen der unterschiedlichen Funktionsvorrichtungen im Inneren der Leuchte schwierig sein. Zudem ergibt sich durch die Platzierung der einzelnen Funktionsvorrichtungen und deren elektrische Verdrahtung ein relativ hoher Platzbedarf.

Die Druckschrift US 2011/0193491 A1 beinhaltet eine Treibervorrichtung für eine LED-Beleuchtungsvorrichtung. Die Treibervorrichtung weist unter anderem eine Steuerung, einen Lichtsensor, einen Präsenzsensor und eine Fernsteuerung auf. Alle Elemente der Treibervorrichtung sind in ein Substrat integriert.

Die Druckschrift DE 203 09 033 U1 beschreibt ein Beleuchtungsmodul, welches LED-Halbleiterchips, auf ein Peltierelement aufgebrachte Sensoren und eine Ansteuer- und Auswerteleketronik aufweist, die auf einer Metall- oder Keramikunterlage aufgebracht sind.

Es ist daher die Aufgabe der vorliegenden Erfindung, die Funktionalität von Leuchtvorrichtungen zu verbessern und dennoch deren Montageaufwand zu verringern und deren Baugröße zu optimieren.

Die Aufgabe wird zum einen durch ein Funktionsmodul mit Funktionsvorrichtungen gelöst, die wenigstens einen Bewegungs-, Präsenz- und/oder Helligkeitssensor, wenigstens eine Leuchten- und/oder Leuchtentreiber-Steuervorrichtung und wenigstens eine Drahtloskommunikationsvorrichtung aufweisen und die mit wenigstens einer LED und/oder einem LED-Treiber gekoppelt oder koppelbar sind, wobei die Funktionsvorrichtungen, also wenigstens der wenigstens eine Bewegungs-, Präsenz- und/oder Helligkeitssensor, die wenigstens eine Leuchten- und/oder Leuchtentreiber-Steuervorrichtung und die wenigstens eine Drahtloskommunikationsvorrichtung, auf einer einzigen Modulplatine zu dem einzigen Funktionsmodul zusammengefasst sind, das als SMD- oder THT-Bauteil ausgeführt und derart ausgebildet ist, dass es zur Bestückung einer Trägerplatine geeignet ist, wobei die Leuchten- und/oder Leuchtentreiber-Steuervorrichtung ein Mikrocontroller der Drahtloskommunikationsvorrichtung ist.

Das Funktionsmodul ist ein intelligentes Sensormodul.

Durch das Zusammenbringen des wenigstens einen Bewegungs-, Präsenz- und/oder Helligkeitssensors, der wenigstens einen Leuchten-Steuervorrichtung und/oder Leuchtentreiber-Steuervorrichtung und der wenigstens einen Drahtloskommunikationsvorrichtung auf der Modulplatine unter Ausbildung des Funktionsmoduls wird die Montage, insbesondere der Verdrahtungsaufwand beim Herstellen von LED-basierten Leuchtvorrichtungen stark vereinfacht. Mit dem Funktionsmodul werden wesentliche Funktionen der jeweiligen Leuchtvorrichtung innerhalb eines einzigen Moduls zur Verfügung gestellt, welches für unterschiedliche Leuchtvorrichtungen eingesetzt werden kann. Dadurch ergibt sich eine hohe Funktionalität der jeweiligen Leuchtvorrichtung mit gleichzeitig hoher Funktionssicherheit.

Die auf der Modulplatine zusammengefassten Funktionsvorrichtungen des Funktionsmoduls sind vorzugsweise in festgelegten Positionen auf der Modulplatine angeordnet und durch auf der Modulplatine vorgesehene Leiterbahnen elektrisch miteinander gekoppelt. Die Modulplatine selbst weist ihrerseits wieder geeignete elektrische Anschlusselemente auf, mit welchen sie auf die Trägerplatine, mit der auch die wenigstens eine LED und der LED-Treiber bestückt sind, aufgebracht werden kann. Entsprechend können durch den Einsatz des Funktionsmoduls Leuchtvorrichtungen mit hoher Funktionalität vergleichsweise problemlos, schnell und kostengünstig gefertigt werden. Auch die Gefahr einer Falschverdrahtung der einzelnen Funktionsvorrichtungen miteinander, eines Kabelbruches oder eines Reißens einer elektrischen Verbindung wird durch den Einsatz der hochgradig stabile Leiterbahnen aufweisenden Modulplatine vermieden.

Für eine besonders einfache und schnelle Montage des Funktionsmoduls in einer Leuchtenanordnung ist die Modulplatine des Funktionsmoduls optimalerweise als SMD (Surface-Mounted-Device)- oder THT (Through-Hole-Technology)-Bauteil ausgebildet. Ist das Funktionsmodul als SMD-Bauteil - auch als oberflächenmontiertes Bauteil bezeichnet - ausgebildet, weist die Modulplatine Lötpads auf, welche der Befestigung auf einer Trägerplatine dienen und einfach mit einem Bestückungsautomaten im SMD-Prozess verarbeitet werden können. Die Lötpads zur Befestigung des Funktionsmoduls auf der Trägerplatine können alternativ auch an einer Abschirmung oder an einem Verbindungselement angeordnet sein. Insofern das Funktionsmodul als THT-Bauteil ausgestaltet ist, welches auch als Durchgangsloch-Technologie-Bauteil bezeichnet werden kann, weist die Modulplatine entweder Lötstifte auf, welche der Bestückung auf einer Durchgangslöcher aufweisenden Trägerplatine dienen, oder weist die Modulplatine Durchgangslöcher auf, in welche an der Trägerplatine vorgesehen Lötstifte eingreifen können.

Die Leuchten- und/oder Leuchtentreiber-Steuervorrichtung ist ein Mikrocontroller der Drahtloskommunikationsvorrichtung. Insofern die Drahtloskommunikationsvorrichtung ein Bluetooth-Modul aufweist, kann hierbei der Bluetooth Chip als Mikrocontroller verwendet werden.

In alternativen Ausgestaltungsvarianten des Funktionsmoduls kann die Modulplatine auch mit Leiterplattenverbindern versehen sein. Bei der Verwendung von Leiterplattenverbindern sind an der Modulplatine vorzugsweise flache Leiterplattenverbinder vorgesehen, wobei Gegenstücke zu den Leiterplattenverbindern an einer mit der Modulplatine zu koppelnden Trägerplatine angebracht sind.

Das Funktionsmodul enthält alle wesentlichen Komponenten, die zur Steuerung einer Leuchtenvorrichtung erforderlich sind. Das Funktionsmodul weist
- einen Bewegungs- oder Präsenzsensor zur Erfassung anwesender Personen und/oder einen Helligkeitssensor zur Erfassung einer Umgebungshelligkeit, um auf Basis der jeweils erfassten Signale eine Steuerung wenigstens eines Leuchtmittels in Abhängigkeit von der Anwesenheit von Personen und/oder vom Umgebungslicht vornehmen zu können,
- eine Drahtloskommunikationsvorrichtung zur Bedienung und Einstellung wenigstens eines Leuchtmittels und/oder der Leuchten- oder Leuchtentreiber-Steuervorrichtung beispielsweise mit Hilfe eines Smartphones oder ähnlichem und gegebenenfalls zur Vernetzung einer Leuchtvorrichtung mit anderen Leuchten und/oder Komponenten einer Gebäudesteuerung sowie
- eine durch die Leuchten- und/oder Leuchtentreiber-Steuervorrichtung hergestellte Schnittstelle zu einer Trägerplatine auf.

Als Trägerplatine wird in der vorliegenden Erfindung die Platine verstanden, die mit dem Funktionsmodul unter Verwendung der Modulplatine bestückt ist.

Die auf der Modulplatine aufgebrachten Funktionsvorrichtungen, also wenigstens der wenigstens eine Bewegungs-, Präsenz- und/oder Helligkeitssensor, die Leuchten- und/oder Leuchtentreiber-Steuervorrichtung und die Drahtloskommunikationsvorrichtung, sind vorzugsweise mittels auf der Modulplatine vorgesehener Leiterbahnen miteinander gekoppelt, können aber auch zumindest teilweise drahtlos miteinander gekoppelt sein.

Die Drahtloskommunikationsvorrichtung des Funktionsmoduls weist vorzugsweise ein Bluetooth-Modul oder einen Bluetooth-Chip auf, welches/welcher eine Bluetooth-Mesh-Funktechnik (Bluetooth-Netz-Funktechnik) und/oder eine BLE (Bluetooth-Low-Energy)-Funktechnik (Bluetooth-Energiespar-Funktechnik) besitzt. Durch die Verwendung einer Bluetooth-Mesh-Funktechnik können verschiedene Bluetooth-fähige Geräte miteinander gekoppelt werden. Durch den Einsatz einer BLE-Funktechnik, d. h. einer stromsparenden Bluetooth-Version, kann auch ohne Bluetooth-Mesh eine Punkt-zu-Punkt-Verbindung, wie beispielsweise eine Verbindung des Funktionsmoduls mit einem Smartphone, hergestellt werden. Als günstig hat es sich hierbei auch herausgestellt, wenn das Bluetooth-Modul als SoC (System on Chip)-System (System auf einem Chip) ausgebildet ist. In alternativen Varianten des Funktionsmoduls kann die Drahtloskommunikationsvorrichtung anstelle von Bluetooth oder zusätzlich oder in Kombination zu diesem auch einen anderen Kommunikationsstandard, wie z. B. Zigbee oder Thread, und/oder eine WLAN- und/oder Infrarot-basierte Kommunikationseinrichtung unterstützen.

Vorteilhafterweise weist das Funktionsmodul wenigstens einen Bewegungs-, Präsenz- und/oder Helligkeitssensor auf, kann jedoch auch nur wenigstens einen Bewegungs- oder Präsenzsensor oder nur wenigstens einen Helligkeitssensor besitzen. Mit dem wenigstens einen Bewegungs- oder Präsenzsensor werden Bewegungen und/oder eine Anwesenheit von Personen, Tieren oder Gegenständen in einem Erfassungsbereich erfasst und infolgedessen ein Leuchtmittel einer Leuchtvorrichtung, welche das Funktionsmodul aufweist, aktiviert oder deaktiviert oder dessen Leuchtstärke geändert, d. h. gedimmt. Hierdurch kann die Leuchtvorrichtung energiesparend betrieben werden. Der wenigstens eine Helligkeitssensor misst oder detektiert die Helligkeit in der Umgebung. Bei Über- bzw. Unterschreitung eines festgelegten Helligkeitswertes wird ein Leuchtmittel aktiviert bzw. deaktiviert, wobei die Aktivierung bzw. Deaktivierung bei Vorhandensein wenigstens eines Bewegungssensors zugleich von den Sensordaten des Bewegungssensors abhängig gestaltet werden kann.

Alternativ kann der wenigstens eine Helligkeitssensor verwendet werden, um den Lichtstrom wenigstens eines Leuchtmittels in Abhängigkeit vom Umgebungslicht so zu regeln, dass immer eine gewünschte Beleuchtungsstärke durch das wenigstens eine Leuchtmittel gewährleistet ist. Bei ausreichendem Umgebungslicht kann der Lichtstrom des wenigstens einen Leuchtmittels und damit dessen Energieverbrauch reduziert werden, was man auch als "daylight harvesting" beschreiben kann.

Die Leuchten- und/oder Leuchtentreiber-Steuervorrichtung des Funktionsmoduls dient der Steuerung wenigstens eines Leuchtmittels, wie wenigstens einer LED, wobei die Leuchten- und/oder Leuchtentreiber-Steuervorrichtung eine Integration in ein Lichtsteuersystem, eine drahtlose Kommunikation mit anderen Leuchten, eine Steuerung von anwendungsspezifischen Lichtszenen und eine Anwendung von Bewegungs-, Präsenz- und/oder Helligkeitssensoren ermöglicht.

In einer günstigen Ausgestaltungsvariante der Erfindung ist das Funktionsmodul in einen LED-Treiber integriert oder ein LED-Treiber Bestandteil des Funktionsmoduls. Ist das Funktionsmodul in dem LED-Treiber integriert, werden mit dem LED-Treiber die wichtigsten für eine Leuchtvorrichtung erforderlichen Funktionen zur Verfügung gestellt. Da die Funktionsvorrichtungen erfindungsgemäß in dem Funktionsmodul zusammengefasst sind, lässt sich dieses relativ einfach in dem LED-Treiber integrieren.

In alternativen Ausführungsformen der Erfindung kann das Funktionsmodul jedoch auch in einen Sensor mit eigener Stromversorgung und Relais bzw. DALI (Digital Addressable Lighting Interface)-Schnittstelle oder einer anderen Schnittstelle integriert sein.

Besonders bevorzugt sind auf einer Rückseite der Modulplatine elektronische Komponenten des Funktionsmoduls, einschließlich der wenigstens einen Leuchten- und/oder Leuchtentreiber-Steuervorrichtung, montiert.

Vorzugsweise sind auf einer Vorderseite der Modulplatine wenigstens eine Antenne der Drahtloskommunikationsvorrichtung und/oder wenigstens eine Antenne eines Bewegungs- oder Präsenzsensors und/oder ein Helligkeitssensor des wenigstens einen Bewegungs-, Präsenz- und/oder Helligkeitssensors angeordnet. Auch bei dieser Ausgestaltung der Erfindung ist die Drahtloskommunikationsvorrichtung mit dem wenigstens einen Bewegungs-, Präsenz- und/oder Helligkeitssensor gekoppelt.

Alternativ kann der Helligkeitssensor auch an einer anderen Position, wie beispielsweise auf der Rückseite der Modulplatine, angeordnet sein, wobei das Tageslicht beispielsweise durch eine Bohrung in der Modulplatine auf den Helligkeitssensor auftreffen kann.

Auch die Antenne der Drahtloskommunikationsvorrichtung kann alternativ an einer anderen Position, wie beispielsweise auf der Rückseite der Modulplatine angeordnet sein.

Aus Kostengründen hat sich der Einsatz einer Leiterzugantenne, wie einer λ/4- oder F-Antenne, als Antenne der Drahtloskommunikationsvorrichtung als günstig herausgestellt. Alternativ kann hier jedoch auch eine Chip-Antenne oder andere Antenne verwendet werden.

In einer weiteren Ausführungsform der Erfindung sind sämtliche auf der Modulplatine angeordneten Elektronikkomponenten, wie der Bewegungs- oder Präsenzsensor, die Antenne des Bewegungs- oder Präsenzsensors, die Drahtloskommunikationsvorrichtung, die Leuchten- und/oder Leuchtentreiber-Steuervorrichtung, der Helligkeitssensor und die Antenne der Drahtloskommunikationsvorrichtung, auf die Vorderseite der Modulplatine aufgebracht.

Im Hinblick auf die Baugröße des Funktionsmoduls und dessen Unterbringung in einer Leuchtvorrichtung hat es sich als günstig herausgestellt, wenn das Funktionsmodul eine Modulfläche von maximal 10 cm² aufweist. Hierbei ist unter einer Modulfläche die Fläche des Funktionsmoduls zu verstehen, die das auf die Trägerplatine aufgebrachte Funktionsmodul in einer Draufsicht aufweist. Das Funktionsmodul ist mit einer Modulfläche von maximal 10 cm² unwesentlich größer als ein HF-Sensormodul, welches typischerweise Abmessungen von 33 x 23 x 5 mm besitzt.

Zusätzlich ist es vorteilhaft, wenn der Mikrocontroller in Verbindung mit dem wenigstens einem Bewegungs-, Präsenz- und/oder Helligkeitssensor ist und einen Sensordatenverarbeitungsbaustein aufweist. Hierdurch kann das die einzelnen Funktionsvorrichtungen aufweisende Funktionsmodul kostengünstig und mit geringem Steueraufwand bereitgestellt werden. Der Mikrocontroller verarbeitet die analogen Sensorsignale des wenigstens einen Bewegungs-, Präsenz- und/oder Helligkeitssensors.

In weiteren Varianten des Funktionsmoduls kann dieses jedoch auch mehr als einen Mikrocontroller aufweisen. So können beispielsweise die wenigstens eine Drahtloskommunikationsvorrichtung und/oder der wenigstens eine Bewegungs-, Präsenz- und/oder Helligkeitssensor mittels separater Mikrocontroller betrieben werden.

Für eine einfache Montage und einen möglichst geringen Platzbedarf des Funktionsmoduls hat es sich zudem als günstig herausgestellt, wenn das Funktionsmodul kein Netzteil und keine Batterien aufweist. Vorteilhafterweise wird in solchen Ausführungsformen das Funktionsmodul bzw. die Funktionsvorrichtungen des Funktionsmoduls durch die Trägerplatine mit einer Gleichspannung bzw. Gleichstrom versorgt.

Ferner ist es im Hinblick auf die Montage und den Platzbedarf des Funktionsmoduls günstig, wenn das Funktionsmodul selbst kein Gehäuse und keine leistungselektronischen oder elektromechanischen Komponenten, wie zum Beispiel Relais, zum direkten Steuern oder Schalten der wenigstens einen LED aufweist. Derartige Komponenten können separat auf der Trägerplatine vorgesehen werden oder sind nicht erforderlich, falls z. B. eine digitale Schnittstelle (wie z. B. DALI) oder ein anderes Steuersignal zur Steuerung des LED-Treibers verwendet wird.

In einer einfachen Ausführungsform der vorliegenden Erfindung ist es beispielsweise auch möglich, dass das Funktionsmodul ein pulsbreitenmoduliertes Signal (PWM) zur Steuerung eines Leuchtmittels, wie der wenigstens einen LED, verwendet. In diesem Fall kann das Leuchtmittel auf der Trägerplatine lediglich mit Hilfe leistungselektronischer Bauteile, wie z. B. mit wenigstens einem Schalttransistor, und ohne zusätzliche Steuerungskomponenten in der Helligkeit gesteuert sowie ein- und ausgeschaltet werden.

In möglichen Ausführungsformen des Funktionsmoduls weist der wenigstens eine Bewegungs-, Präsenz- und/oder Helligkeitssensor wenigstens einen HF-Sensor auf, der elektromagnetische Wellen mit einer Frequenz von 5,8 GHz, 24 GHz, 61 GHz oder 120 GHz aussendet. Der HF-Sensor dient der Erfassung einer Bewegung und damit der Aktivierung einer LED. Der HF-Sensor registriert hierbei beispielsweise eine Frequenzverschiebung der von einem bewegten Objekt reflektierten HF-Strahlung, wobei der Doppler-Effekt genutzt wird. Alternativ können auch andere HF-Sensorverfahren verwendet werden, die zusätzlich oder alternativ zur Bewegungserkennung Abstand, Winkel oder 3D-Positionen im Raum erfassen können. Beispiele hierfür sind FMCW, FSK, MIMO o. a. Bei Erkennung einer Bewegung und/oder von Veränderungen im Echobild aktiviert der HF-Sensor eine Beleuchtung. Die Verwendung eines HF-Sensors mit geringer Frequenz, wie 5,8 GHz, führt zur Ausbildung eines vergleichsweise kostengünstigen Funktionsmoduls. Wird hingegen ein HF-Sensor mit höherer Frequenz, wie beispielsweise 61 GHz oder 120 GHz, verwendet, kann die Baugröße des wenigstens einen Bewegungs-, Präsenz- und/oder Helligkeitssensors und damit auch des Funktionsmoduls verringert werden. In alternativen Ausführungsformen des Funktionsmoduls können anstelle eines HF-Sensors auch andere Sensoren, wie wenigstens ein Infrarotsensor, zum Einsatz kommen.

In einer vorteilhaften Ausführungsform der vorliegenden Erfindung ist der wenigstens eine Bewegungs-, Präsenz- und/oder Helligkeitssensor auf wenigstens einer Basisplatine aufgebracht, mit der die Modulplatine bestückt ist. Das Aufbringen des wenigstens einen Bewegungs-, Präsenz- und/oder Helligkeitssensors auf die Basisplatine ermöglicht ein schnelles und kostengünstiges Platzieren dieser Komponente(n) auf der Modulplatine. Der wenigstens eine Bewegungs-, Präsenz- und/oder Helligkeitssensor kann durch dessen Anordnen auf der wenigstens einen Basisplatine als separates Modul auf die Modulplatine aufgebracht werden, wodurch die Herstellungskosten des Funktionsmoduls gesenkt werden können. Durch die Verwendung der Basisplatine kann die Modulplatine aus einem kostengünstigen Material und/oder mit geringen Abmessungen hergestellt werden. Ferner erhöht das Aufbringen des Bewegungs-, Präsenz- und/oder Helligkeitssensors auf die Basisplatine auch die Flexibilität des Funktionsmoduls, da ohne Weiteres verschiedene Funktionsvorrichtungen auf der Modulplatine angeordnet werden können. Besonders bevorzugt sind wenigstens der Bewegungs- oder Präsenzsensor und dessen wenigstens eine Antenne auf der Basisplatine aufgebracht.

Die Aufgabe wird ferner durch eine Leuchtvorrichtung mit wenigstens einer LED, einem LED-Treiber und erfindungsgemäßen Funktionsvorrichtungen gelöst.

In einer vorteilhaften Ausführungsform dieser Leuchtvorrichtung ist wenigstens die wenigstens eine LED auf der gleichen Trägerplatine wie das Funktionsmodul aufgebracht.

In einer weiteren vorteilhaften Ausführungsform der erfindungsgemäßen Leuchtvorrichtung ist auch der LED-Treiber auf der Trägerplatine aufgebracht.

Die erfindungsgemäße Leuchtvorrichtung weist also neben der wenigstens einen LED und dem LED-Treiber die zu dem Funktionsmodul zusammengefassten Funktionsvorrichtungen auf.

Vorzugsweise sind mindestens die wenigstens eine LED und das Funktionsmodul auf der gleichen Trägerplatine aufgebracht und funktionsgerecht elektrisch miteinander verbunden.

Es ist aber auch bei der erfindungsgemäßen Leuchtvorrichtung möglich, dass das Funktionsmodul in dem LED-Treiber oder in einem Sensor des wenigstens einen Bewegungs-, Präsenz- und/oder Helligkeitssensors eingebaut ist, wobei bei dieser Ausführungsform der Erfindung das Funktionsmodul nicht auf der gleichen Trägerplatine wie die wenigstens eine LED montiert ist.

In einer einfachen Ausführungsform der vorliegenden Erfindung setzt sich die Leuchtvorrichtung lediglich aus vier Komponenten zusammen, nämlich einer Trägerplatine, wenigstens einer darauf aufgebrachten LED, einem auf der Trägerplatine aufgebrachten oder separat vorgesehenen, zugehörigen LED-Treiber und einem ebenfalls auf der Trägerplatine aufgebrachten Funktionsmodul, das wenigstens einen Bewegungs-, Präsenz- und/oder Helligkeitssensor, wenigstens eine Leuchten- und/oder Leuchtentreiber-Steuervorrichtung und wenigstens eine Drahtloskommunikationsvorrichtung beinhaltet, welche alle auf einer einzigen Modulplatine montiert sind. Die Leuchtvorrichtung kann damit kostengünstig und mit vergleichsweise geringem Montageaufwand hergestellt werden. Zum Ausbilden einer solchen Leuchtvorrichtung ist es lediglich erforderlich, die Trägerplatine mit der wenigstens einen LED, dem LED-Treiber und dem Funktionsmodul zu bestücken. Entsprechende Verdrahtungen, durch die die wenigstens eine LED, der LED-Treiber und die Funktionsvorrichtungen des Funktionsmoduls elektrisch und damit auch funktional miteinander verbunden werden, können dabei vorzugsweise bereits auf der Trägerplatine vorhanden sein. Neben einer wesentlichen Vereinfachung und Beschleunigung des Montagevorganges kann durch die Verwendung des Funktionsmoduls bei der Leuchtvorrichtungsmontage die Gefahr einer falschen Verdrahtung der einzelnen Funktionsvorrichtungen und die Gefahr einer Beschädigung einzelner Verbindungen wesentlich minimiert werden.

Unter einem LED-Treiber wird in der vorliegenden Erfindung ein Vorschaltgerät zur Ansteuerung der wenigstens einen LED und Wandlung der Netzspannung in Gleichstrom bzw. -spannung verstanden.

Die in den Figuren gezeigten Ausführungsformen fallen nicht unter den Wortlaut der Ansprüche, werden aber als das Verständnis der Erfindung erleichternd angesehen. Dabei zeigen
- Figur 1: schematisch eine Ausführungsform einer Leuchtvorrichtung mit einem Funktionsmodul in einer Seitenansicht;
- Figur 2: schematisch eine weitere Ausführungsform einer Leuchtvorrichtung mit einem Funktionsmodul in einer Seitenansicht;
- Figur 3: schematisch die Funktion eines Funktionsmoduls gemäß einer Ausführungsform;
- Figur 4: schematisch die Funktion einer Trägerplatine mit einem LED-Treiber und einem Funktionsmodul entsprechend einer Ausführungsform;
- Figur 5: schematisch die Funktion eines LED-Treibers mit integriertem Funktionsmodul gemäß einer Ausführungsform;
- Figur 6: schematisch die Integration eines Funktionsmoduls gemäß einer Ausführungsform in einen Sensor
- Figur 7: schematisch eine weitere Ausführungsform einer Leuchtvorrichtung mit einem Funktionsmodul in einer Seitenansicht;
- Figur 8: schematisch noch eine weitere Ausführungsform einer Leuchtvorrichtung mit einem Funktionsmodul in einer Seitenansicht; und
- Figur 9: schematisch noch eine andere Ausführungsform einer Leuchtvorrichtung mit einem Funktionsmodul in einer Seitenansicht.

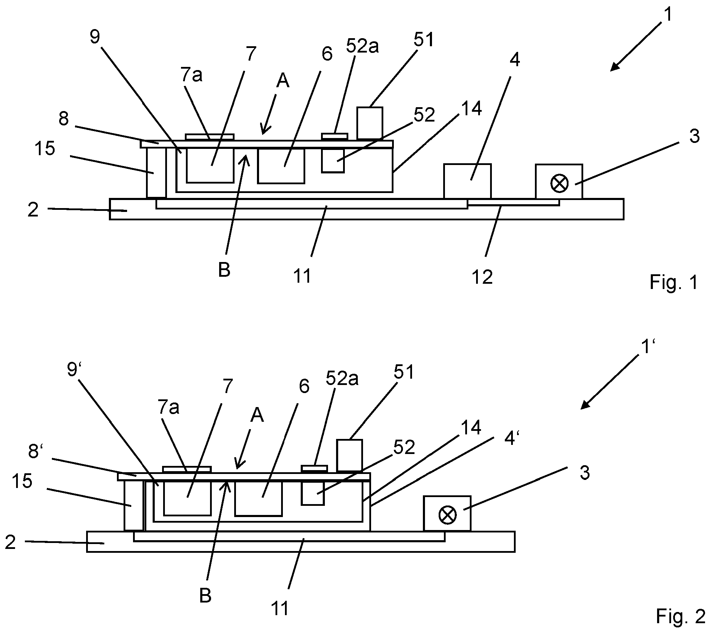

Figur 1 zeigt schematisch eine Ausführungsform einer Leuchtvorrichtung 1 mit einem Funktionsmodul 9 in einer Seitenansicht. Die Leuchtvorrichtung 1 weist eine Trägerplatine 2 auf, auf welcher eine LED 3, ein LED-Treiber 4 und das Funktionsmodul 9 aufgebracht und montiert sind. Anstelle der einen LED 3 kann auch eine Mehrzahl von LEDs 3 verwendet werden. Vorzugsweise dient dann der LED-Treiber 4 der Ansteuerung aller LEDs 3, es können jedoch auch mehrere LED-Treiber 4 auf der Trägerplatine 2 vorgesehen sein.

Die LED 3 dient als Lichtquelle. Der LED-Treiber 4 ist der LED 3 vorgeschaltet und elektrisch leitend mit dieser verbunden. Der LED-Treiber 4 dient der Regulierung eines Stromflusses eines Stromnetzes, wobei ein Wechselstrom des Stromnetzes auf einen konstant niedrigen Gleichstrom, mit welchem die LED 3 arbeitet, überführt wird.

In dem Ausführungsbeispiel von Figur 1 ist der LED-Treiber 4 gemeinsam mit der LED 3 auf der Trägerplatine 2 aufgebracht. Eine Kopplung der LED 3 mit dem LED-Treiber 4 erfolgt hierbei mittels wenigstens einer auf der Trägerplatine 2 aufgebrachten Leiterbahn 12. Alternativ kann sich der LED-Treiber 4 jedoch auch auf einer separaten Platine, also nicht der Trägerplatine 2 befinden, wobei dann die separate Platine mit der Trägerplatine 2 elektrisch leitend gekoppelt ist.

Das Funktionsmodul 9 weist in der in Figur 1 gezeigten Ausführungsform eine Modulplatine 8 auf, auf deren Rückseite B bestimmte Elektronikkomponenten des Funktionsmoduls 9, wie ein Bewegungs- oder Präsenzsensor 52, eine Drahtloskommunikationsvorrichtung 7 und eine Leuchten- und/oder Leuchtentreiber-Steuervorrichtung 6 montiert sind, während auf einer Vorderseite A der Modulplatine 8 eine Antenne 52a des Bewegungs- oder Präsenzsensors 52, ein Helligkeitssensor 51 und eine Antenne 7a der Drahtloskommunikationsvorrichtung 7 vorgesehen sind. Anstelle des rein exemplarisch dargestellten Helligkeitssensors 51 kann eine Mehrzahl von Helligkeitssensoren 51 auf der Vorderseite A der Modulplatine 8 vorgesehen sein. Ebenso kann/können auch eine Mehrzahl von Antennen 7a der Drahtloskommunikationsvorrichtung 7 und/oder eine Mehrzahl von Antennen 52a von Bewegungs- oder Präsenzsensoren 52 auf der Vorderseite der Modulplatine 8 vorgesehen sein.

Der Bewegungs- oder Präsenzsensor 52, der Helligkeitssensor 51, die Leuchten- und/oder Leuchtentreiber-Steuervorrichtung 6 und die Drahtloskommunikationsvorrichtung 7 sind durch hier nicht dargestellte Leiterbahnen miteinander verbunden, können aber auch zumindest teilweise drahtlos miteinander verbunden sein.

Die Elektronikkomponenten auf der Modulplatine 8 sind zumindest teilweise von einer Abschirmung 14 umgeben. Die Abschirmung 14 erfüllt die EMV-Anforderungen der EU-Richtlinien und vergleichbarer Regelungen anderer Märkte. Die Abschirmung 14 kann beispielsweise aus Blech oder aus Leiterplattenmaterial ausgebildet sein.

Die Modulplatine 8 ist über wenigstens eine elektrische Verbindung 15 mit der Trägerplatine 2 elektrisch leitend verbunden. Die wenigstens eine elektrische Verbindung 15 dient der Stromversorgung des Funktionsmoduls 9 und der elektrischen Verbindung zwischen der Leuchten- und/oder Leuchtentreiber-Steuervorrichtung 6 und dem LED-Treiber 4. Die wenigstens eine elektrische Verbindung 15 kann durch SMD-Pads an der Abschirmung 14, durch SMD-Pads an der Modulplatine 8, durch Lötstifte und/oder durch Leiterplattenverbinder technisch realisiert sein.

Durch das Zusammenbringen des Bewegungs- oder Präsenzsensor 52, des Helligkeitssensors 51, der Leuchten- und/oder Leuchtentreiber-Steuervorrichtung 6 und der Drahtloskommunikationsvorrichtung 7 auf der Modulplatine 8 in Form des Funktionsmoduls 9 kann die Leuchtvorrichtung 1 mit geringem Montage- und Elektronikaufwand und zugleich kostengünstig ausgebildet werden. Vorteilhafterweise kann das derartig ausgebildete Funktionsmodul 9 mit geringem Aufwand auf unterschiedliche Platinen, wie die Trägerplatine 2, zur Funktionsbereitstellung für unterschiedliche Leuchtmittel, wie beispielsweise LEDs, aufgebracht werden.

Das Funktionsmodul 9 ist in der gezeigten Ausführungsform als SMD-Bauteil ausgebildet und auf der Trägerplatine 2 platziert.

In alternativen Ausführungsformen der Leuchtvorrichtung 1 kann das Funktionsmodul 9 jedoch auch anders ausgebildet und auf der Trägerplatine 2 befestigt sein. Beispielsweise kann das Funktionsmodul 9 als THT-Bauteil ausgestaltet sein, wobei die Modulplatine 8 Lötstifte aufweist, welche der Bestückung auf der Trägerplatine 2 dienen. Ferner können zum Anbringen des Funktionsmoduls 9 auf der Trägerplatine 2 auch Leiterplattenverbinder verwendet werden. Hierbei ist die Modulplatine 8 des Funktionsmoduls 9 mit flachen Leiterplattenverbindern versehen, wobei sich Gegenstücke zu den Leiterplattenverbindern an der Trägerplatine 2 befinden.

Die Modulplatine 8 ist durch wenigstens eine Leiterbahn 11 elektrisch leitend mit dem LED-Treiber 4 gekoppelt. Der LED-Treiber 4 wiederum ist durch wenigstens eine Leiterbahn 12 mit der LED 3 verbunden.

Die Stromversorgung des Funktionsmoduls 9 bzw. der einzelnen, Strom benötigenden Funktionsvorrichtungen des Funktionsmoduls 9, wie der Bewegungs- oder Präsenzsensor 52, der Helligkeitssensor 51, die Leuchten- und/oder Leuchtentreiber-Steuervorrichtung 6 und die Drahtloskommunikationsvorrichtung 7, wird über eine hier nicht dargestellte, auf der Trägerplatine 2 montierte Stromquelle realisiert. Beispielsweise kann der LED-Treiber 4 als Stromquelle dienen.

Die Drahtloskommunikationsvorrichtung 7 weist in der dargestellten Ausführungsform zur Kommunikation mit einem Anwender ein Bluetooth-Modul oder einen Bluetooth-Chip auf. Mittels des Bluetooth-Moduls oder -Chips kann der jeweilige Anwender beispielsweise mit Hilfe eines Smartphones die Leuchtvorrichtung 1 steuern. Das Bluetooth-Modul oder der Bluetooth-Chip verwendet eine Bluetooth-Mesh-Funktechnik und eine BLE-Funktechnik. Die BLE-Funktechnik ermöglicht eine Datenübertragung mit geringem Energieverbrauch. Bluetooth-Mesh stellt eine drahtlose Kommunikationstechnologie dar, die auf dem Kommunikationsprotokoll BLE basiert und optional verwendet werden kann. Mit Bluetooth-Mesh kann eine Kommunikation zwischen vielen verschiedenen Geräten, wie unterschiedlichen Leuchten oder anderen Produkten einer Gebäudesteuerung, aufgebaut werden. Eine Datenübertragung funktioniert hierbei auch, wenn sich das Gerät, das eine Nachricht ursprünglich gesendet hat, nicht in direkter Funkreichweite befindet. Ferner ermöglicht die Nutzung von Bluetooth-Mesh die Kommunikation zwischen Geräten unterschiedlicher Hersteller.

Die Leuchten- und/oder Leuchtentreiber-Steuervorrichtung 6 dient der Steuerung der LED 3, der Integration der Leuchtvorrichtung 1 in ein Lichtsteuersystem, der drahtlosen Kommunikation mit anderen Leuchten und/oder einem Smartphone o. ä. sowie der Steuerung von anwendungsspezifischen Lichtszenen.

Der Bewegungs- oder Präsenzsensor 52 und der Helligkeitssensor 51 dienen der Steuerung der LED 3 in Abhängigkeit von der Anwesenheit von Personen und der Umgebungshelligkeit. Der Bewegungs- oder Präsenzsensor 52 ist ein HF-Sensor. In dem gezeigten Ausführungsbeispiel wird ein 5,8 GHz-Sensor als HF-Sensor verwendet. Alternativ können jedoch auch HF-Sensoren mit höherer Frequenz eingesetzt werden, wodurch die Baugröße des Funktionsmoduls 9 verringert werden kann.

Figur 2 zeigt schematisch eine weitere Ausführungsform einer Leuchtvorrichtung 1' mit einem Funktionsmodul 9' in einer Seitenansicht, wobei gleiche Bezugszeichen wie in Figur 1 gleiche oder ähnliche Elemente bezeichnen, weshalb an dieser Stelle zur Vermeidung von Wiederholungen auf die obigen Ausführungen zu diesen Elementen verwiesen wird.

Anders als in dem in Figur 1 gezeigten Ausführungsbeispiel der Leuchtvorrichtung 1 ist bei der Leuchtvorrichtung 1' von Figur 2 das Funktionsmodul 9' in einen LED-Treiber 4' integriert. Der LED-Treiber 4' enthält damit sämtliche für eine Leuchtvorrichtung erforderlichen Funktionen mit Ausnahme einer LED 3. Vorteilhafterweise kann ein derartiger LED-Treiber 4' flexibel mit verschiedensten Leuchtmitteln und Bauformen von LED aufweisenden Platinen kombiniert werden.

Das in den LED-Treiber 4' integrierte Funktionsmodul 9' ist mittels einer Modulplatine 8', auf der auch der LED-Treiber 4' montiert ist, auf einer Trägerplatine 2 aufgebracht. Die Modulplatine 8' ist durch wenigstens eine auf die Trägerplatine 2 aufgebrachte Leiterbahn 11 mit der LED 3 elektrisch leitend verbunden. In anderen Varianten der Leuchtvorrichtung 1' kann diese auch mehr als eine LED 3 aufweisen.

Auch bei der Leuchtvorrichtung 1' von Figur 2 weist die Drahtloskommunikationsvorrichtung 7 eine auf einer Vorderseite A der Modulplatine 8' vorgesehene Antenne 7a auf. Ferner sind auch die Antenne 52a eines auf der Rückseite B der Modulplatine 8' angeordneten Bewegungs- oder Präsenzsensors 52 sowie ein Helligkeitssensor 51 auf der Vorderseite der Modulplatine 8' vorgesehen.

Während die Vorderseite A der Modulplatine 8' einer Wechselwirkung mit der Umgebung dient, sind auf der Rückseite B der Modulplatine 8' die zugehörigen elektronischen Bauteile, wie u. a. Bewegungs- oder Präsenzsensor 52 als auch ein Bluetooth-Chip der Drahtloskommunikationsvorrichtung 7 vorgesehen.

Aus Kostengründen werden in dem in Figur 2 gezeigten Ausführungsbeispiel als Antennen 7a, 52a Leiterzugantennen verwendet. Alternativ kann jedoch auch wenigstens eine Chip-Antenne oder eine andere Antenne zum Einsatz kommen. Eine Chip-Antenne kann beispielsweise verwendet werden, wenn eine Leiterzugantenne aus Platz- oder Performancegründen nicht nutzbar ist.

Die Modulplatine 8' ist über wenigstens eine elektrische Verbindung 15 elektrisch leitend mit elektrischen Leitbahnen 11 auf der Trägerplatine 2 verbunden. Über die Trägerplatine 2 ist die Modulplatine 8' mit der LED 3 gekoppelt ist.

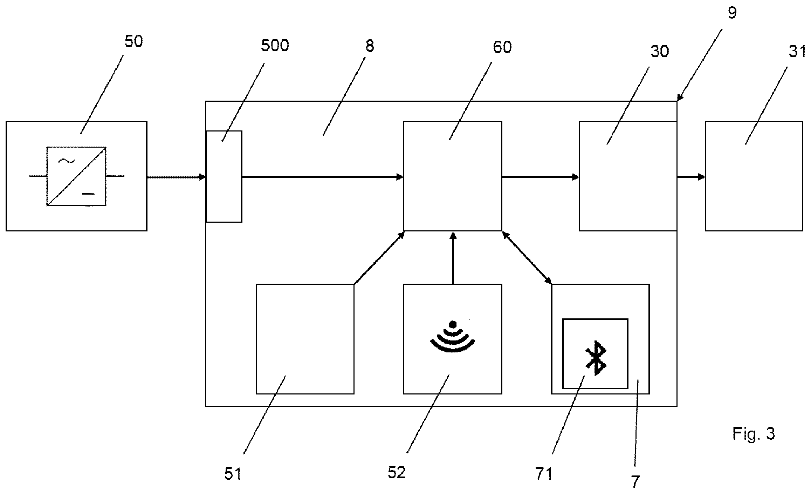

Figur 3 zeigt schematisch die Funktion eines Funktionsmoduls 9. Das in Figur 3 abgebildete Funktionsmodul 9 weist einen Anschluss 500 für eine Versorgungsspannung, einen Mikrocontroller 60, einen Helligkeitssensor 51, einen Bewegungs- oder Präsenzsensor 52, eine Drahtloskommunikationsvorrichtung 7 mit Bluetooth-Modul 71 sowie eine Schnittstelle 30 zu einer hier nicht dargestellten LED 3 auf.

Der Anschluss 500 ist einerseits elektrisch mit einer Stromquelle 50 verbunden und andererseits mit dem Mikrocontroller 60, dem Helligkeitssensor 51, dem Bewegungs- oder Präsenzsensor 52 sowie dem Bluetooth-Modul oder -Chip 71 verbunden. Der Mikrocontroller 60 ist zur Steuerung der LED 3 ferner mit den Sensoren 51, 52, der Drahtloskommunikationsvorrichtung 7 und der Schnittstelle 30 gekoppelt. Die Schnittstelle 30 gibt die Signale des Mikrocontrollers 60 an eine als Relais ausgebildete Schalteinrichtung 31, weiter, welcher mit der hier nicht dargestellten LED 3 verbunden ist.

Das in Figur 3 gezeigte Funktionsmodul 9 fasst vorteilhafterweise alle zum Steuern einer LED 3 erforderlichen Funktionsvorrichtungen als Einheit zusammen. Das gezeigte Funktionsmodul 9 besitzt dabei jedoch keine eigene Stromquelle, kein Gehäuse und keine leistungselektronischen oder elektromechanischen Komponenten zum direkten Steuern oder Schalten eines Leuchtmittels. In weiteren Ausgestaltungsvarianten des Funktionsmoduls 9 kann dieses jedoch auch eine Stromquelle und/oder ein Gehäuse und/oder wenigstens eine leistungselektronische oder elektromechanische Komponente aufweisen.

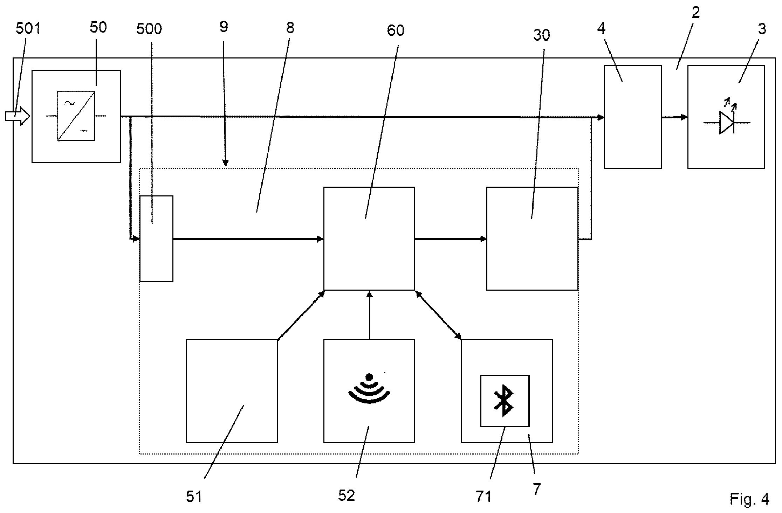

Figur 4 zeigt schematisch die Funktion einer Trägerplatine 2 mit einem LED-Treiber 4 und einem Funktionsmodul 9. In dem in Figur 4 gezeigten Ausführungsbeispiel sind auf der Trägerplatine 2 neben dem Funktionsmodul 9 auch noch eine Stromquelle 50, ein LED-Treiber 4 und eine LED 3 aufgebracht. Bei Verwendung einer derartig ausgebildeten Trägerplatine 2 würde eine Leuchtvorrichtung lediglich die Trägerplatine 2 mit den auf ihr aufgebrachten Komponenten aufweisen. Optional kann der LED-Treiber 4 jedoch auch separat von der mit dem Funktionsmodul 9 und der Stromquelle 50 bestückten Trägerplatine 2 in eine Leuchtvorrichtung eingebracht werden.

Das Funktionsmodul 9 von Figur 4 entspricht im wesentlich dem Funktionsmodul 9 von Figur 3, wobei das Funktionsmodul 9 von Figur 4 nicht mit einer Schalteinrichtung 31, sondern mit dem LED-Treiber 4 gekoppelt ist. Der LED-Treiber 4 wiederum ist zur Steuerung der LED 3 elektrisch leitend mit dieser verbunden. Eine Stromversorgung des LED-Treibers 4 erfolgt wie die Stromversorgung des Funktionsmoduls 9 durch die Stromquelle 50, welche einen Netzanschluss 501 aufweist.

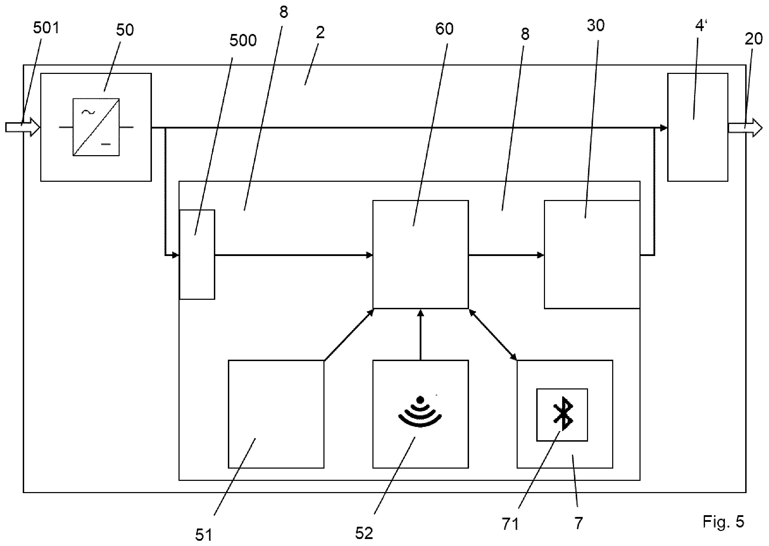

Figur 5 zeigt schematisch die Funktion eines LED-Treibers 4' mit integriertem Funktionsmodul 9. Im Gegensatz zu dem Ausführungsbeispiel von Figur 4 ist die LED 3 hier auf einer separaten Platine vorgesehen, welche mittels der Verbindung 20 mit dem LED-Treiber 4' gekoppelt ist. Die Kopplung erfolgt in diesem Ausführungsbeispiel mittels Kabel, kann jedoch auch durch eine Leiterbahn oder anders vorgenommen werden. Der LED-Treiber 4' stellt in diesem Ausführungsbeispiel mehrere unterschiedliche für eine Leuchtvorrichtung erforderliche Funktionen zur Verfügung. Vorteilhafterweise kann ein derartiger LED-Treiber 4' flexibel mit verschiedensten Leuchtmitteln kombiniert werden.

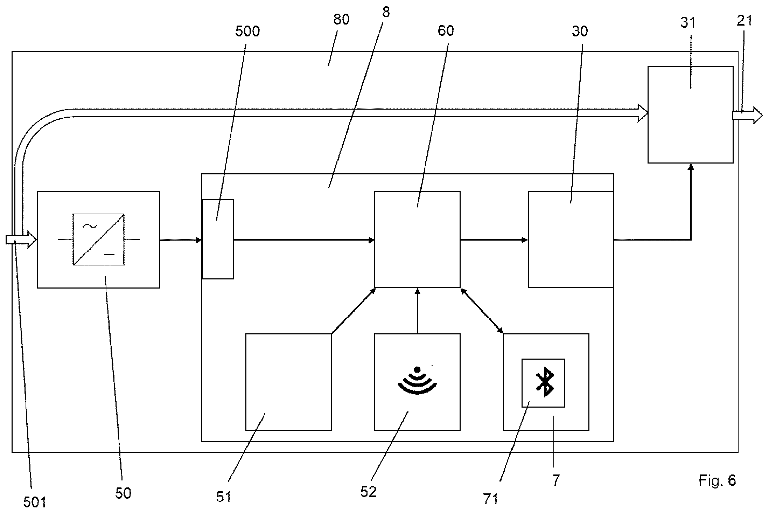

Figur 6 zeigt schematisch die Integration eines Funktionsmoduls 9 in einen Sensor 80 mit eigener Stromquelle 50 und als Relais ausgebildeter Schalteinrichtung 31.

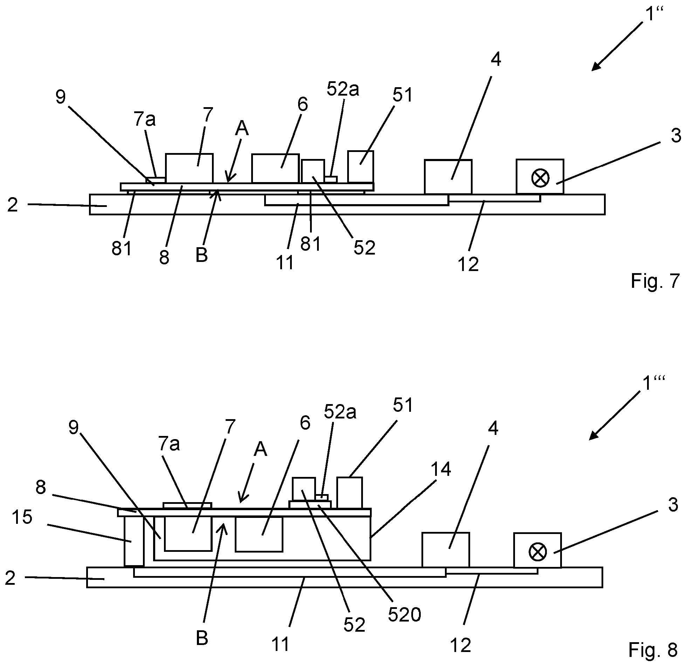

Figur 7 zeigt schematisch eine weitere Ausführungsform einer Leuchtvorrichtung 1" mit einem Funktionsmodul 9 in einer Seitenansicht. Anders als in den Figuren 1 und 2 befinden sich bei der Leuchtvorrichtung 1" von Figur 7 sämtliche auf der Modulplatine 8 angebrachte Elektronikkomponenten auf einer Vorderseite A der Modulplatine 8. In diesem Fall sind die Drahtloskommunikationsvorrichtung 7, die Antenne 7a der Drahtloskommunikationsvorrichtung 7, die Leuchten- und/oder Leuchtentreiber-Steuervorrichtung 6, der Bewegungs- oder Präsenzsensor 52, die Antenne 52a des Bewegungs- oder Präsenzsensors 52 und der Helligkeitssensor 51 auf der Vorderseite A der Modulplatine 8 angeordnet, wohingegen sich auf einer Rückseite B der Modulplatine 8 keine Elektronikkomponenten befinden.

In der in Figur 7 gezeigten Ausführungsform weist die Leuchtvorrichtung 1" keine Abschirmung 14 auf, die die auf der Modulplatine 8 platzierten Elektronikkomponenten umgibt. Durch das Aufbringen der Elektronikkomponenten auf der Vorderseite A der Modulplatine 8 und dem damit einhergehenden Verzicht auf die Abschirmung 14 kann die Leuchtvorrichtung 1" vergleichsweise kostengünstig hergestellt werden. In alternativen Ausführungsformen der Leuchtvorrichtung 1" können die auf der Vorderseite A der Modulplatine 8 aufgebrachten Elektronikkomponenten auch zumindest teilweise von einer Abschirmung umgeben sein.

Die Modulplatine 8, ist, anders als in den Figuren 1 und 2 gezeigten Ausführungsformen, nicht über eine, beispielsweise in Form eines Steckers ausgebildete, elektrische Verbindung 15 mit der Trägerplatine 2 elektrisch leitend verbunden, sondern über eine SMD-Lötverbindung. Hierzu weist die Modulplatine 8 SMD-Pads 81 auf, welche zugleich der Befestigung der Modulplatine 8 auf der Trägerplatine 2 als auch der elektrischen Verbindung der Modulplatine 8 mit der Trägerplatine 2 dienen.

Figur 8 zeigt schematisch noch eine weitere Ausführungsform einer Leuchtvorrichtung 1‴ mit einem Funktionsmodul 8 in einer Seitenansicht.

Das Funktionsmodul 9 der Leuchtvorrichtung 1‴ von Figur 8 weist eine Modulplatine 8 auf, auf deren Rückseite B bestimmte Elektronikkomponenten des Funktionsmoduls 9, wie die Drahtloskommunikationsvorrichtung 7 und die Leuchten- und/oder Leuchtentreiber-Steuervorrichtung 6, montiert sind. Auf der Vorderseite A der Modulplatine 8 sind der Bewegungs- und/oder Präsenzsensor 52, die Antenne 52a des Bewegungs- oder Präsenzsensors 52, der Helligkeitssensor 51 und die Antenne 7a der Drahtloskommunikationsvorrichtung 7 vorgesehen.

Bei der Leuchtvorrichtung 1‴ von Figur 8 sind der Bewegungs- oder Präsenzsensor 52 und die Antenne 52a des Bewegungs- und Präsenzsensors 52 auf einer gemeinsamen Basisplatine 520 angeordnet, welche auf die Vorderseite A der Modulplatine 8 aufgebracht ist. Der Bewegungs- oder Präsenzsensors 52 und die Antenne 52a des Bewegungs- und Präsenzsensors 52 sind dadurch schnell und kostengünstig mit der Modulplatine 8 koppelbar.

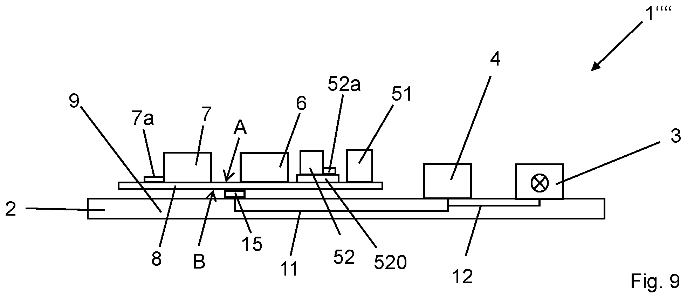

In einer anderen, in Figur 9 gezeigten Ausführungsform einer Leuchtvorrichtung 1ʺʺ sind, wie in der in Figur 7 dargestellten Ausführungsform, sämtliche auf der Modulplatine 8 angeordnete Elektronikkomponenten auf deren Vorderseite A angeordnet. Im Unterschied zu der in Figur 7 gezeigten Ausführungsform der Leuchtvorrichtung 1" sind bei der Leuchtvorrichtung 1ʺʺ von Figur 9 der Bewegungs- oder Präsenzsensor 52 und die Antenne 52a des Bewegungs- oder Präsenzsensors 52 auf einer Basisplatine 520 angeordnet. Die Basisplatine 520 ist elektrisch leitend mit der Modulplatine 8 verbunden.

In einer weiteren Ausführungsform der Leuchtvorrichtung 1ʺʺ ist es auch denkbar, dass beispielsweise die Drahtloskommunikationsvorrichtung 7 und die Antenne 7a der Drahtloskommunikationsvorrichtung 7, der Helligkeitssensor 51 und/oder die Leuchten- und/oder Leuchtentreiber-Steuervorrichtung 6 auf wenigstens einer weiteren Basisplatine angeordnet sind, die elektrisch leitend mit der Modulplatine 8 verbunden ist.

Ferner ist in der in Figur 9 gezeigten Ausführungsform der Leuchtvorrichtung 1ʺʺ die Modulplatine 8, anders als in Figur 7, nicht mittels SMD-Pads 81 elektrisch mit der Trägerplatine 2 verbunden, sondern über eine elektrische Verbindung 15. Die elektrische Verbindung 15 ist vorliegend als Stecker ausgebildet, kann in weiteren Ausführungsform der Leuchtvorrichtung 1ʺʺ jedoch auch anders ausgestaltet sein. Im einfachsten Fall ist die elektrische Verbindung als elektrisch leitendes Kabel ausgebildet, welches sowohl mit der Modulplatine 8 als auch mit der Trägerplatine 2 verbunden ist.

## Patentansprüche

1. Funktionsmodul (9, 9') mit Funktionsvorrichtungen (51, 52, 6, 7), die wenigstens einen Bewegungs-, Präsenz- und/oder Helligkeitssensor (51, 52), wenigstens eine Leuchten- und/oder Leuchtentreiber-Steuervorrichtung (6) und wenigstens eine Drahtloskommunikationsvorrichtung (7) aufweisen und die mit wenigstens einer LED (3) und/oder einem LED-Treiber (4, 4') gekoppelt oder koppelbar sind,
wobei die Funktionsvorrichtungen (51, 52, 6, 7) auf einer einzigen Modulplatine (8) zu dem Funktionsmodul (9, 9') zusammengefasst sind, das als SMD- oder THT-Bauteil ausgeführt und derart ausgebildet ist, dass es zur Bestückung einer Trägerplatine (2) geeignet ist, wobei die Leuchten- und/oder Leuchtentreiber-Steuervorrichtung (6) ein Mikrocontroller der Drahtloskommunikationsvorrichtung (7) ist.

2. Funktionsmodul mit Funktionsvorrichtungen nach Anspruch 1, **dadurch gekennzeichnet, dass** das Funktionsmodul (9, 9') in einen LED-Treiber (4, 4') integriert ist oder ein LED-Treiber (4, 4') Bestandteil des Funktionsmoduls (9, 9') ist.

3. Funktionsmodul mit Funktionsvorrichtungen nach Anspruch 1 oder 2, **dadurch gekennzeichnet, dass** auf einer Rückseite (B) der Modulplatine (8, 8') elektronische Komponenten des Funktionsmoduls (9), einschließlich der wenigstens einen Leuchten- und/oder Leuchtentreiber-Steuervorrichtung (6), montiert sind.

4. Funktionsmodul mit Funktionsvorrichtungen nach Anspruch 3, **dadurch gekennzeichnet, dass** auf einer Vorderseite (A) der Modulplatine (8, 8') wenigstens eine Antenne (7a) der Drahtloskommunikationsvorrichtung (7) und/oder wenigstens eine Antenne (52a) eines Bewegungs- oder Präsenzsensors (52) und/oder ein Helligkeitssensor (51) des wenigstens einen Bewegungs-, Präsenz- und/oder Helligkeitssensors (51, 52) angeordnet ist/sind.

5. Funktionsmodul mit Funktionsvorrichtungen nach Anspruch 1 oder 2, **dadurch gekennzeichnet, dass** auf einer Vorderseite (A) der Modulplatine (8, 8') alle elektronischen Komponenten des Funktionsmoduls (9), einschließlich der wenigstens einen Leuchten- und/oder Leuchtentreiber-Steuervorrichtung (6), montiert sind.

6. Funktionsmodul mit Funktionsvorrichtungen nach einem der vorhergehenden Ansprüche, **dadurch gekennzeichnet, dass** das Funktionsmodul (9, 9') eine Modulfläche von maximal 10 cm² aufweist.

7. Funktionsmodul mit Funktionsvorrichtungen nach einem der vorhergehenden Ansprüche, **dadurch gekennzeichnet, dass** der Mikrocontroller in Verbindung mit dem wenigstens einen Bewegungs-, Präsenz- und/oder Helligkeitssensor (51, 52) ist und einen Sensordatenverarbeitungsbaustein aufweist.

8. Funktionsmodul mit Funktionsvorrichtungen nach einem der vorhergehenden Ansprüche, **dadurch gekennzeichnet, dass** das Funktionsmodul (9, 9') kein Netzteil und keine Batterien aufweist.

9. Funktionsmodul mit Funktionsvorrichtungen nach einem der vorhergehenden Ansprüche, **dadurch gekennzeichnet, dass** der wenigstens eine Bewegungs-, Präsenz- und/oder Helligkeitssensor (51, 52) wenigstens einen HF-Sensor aufweist, der dazu ausgebildet ist, elektromagnetische Wellen mit einer Frequenz von 5,8 GHz, 24 GHz, 61 GHz oder 120 GHz auszusenden.

10. Funktionsmodul mit Funktionsvorrichtungen nach einem der vorhergehenden Ansprüche, **dadurch gekennzeichnet, dass** der wenigstens eine Bewegungs-, Präsenz- und/oder Helligkeitssensor (51, 52) auf wenigstens einer Basisplatine (520) aufgebracht ist, mit der die Modulplatine (8, 8') bestückt ist.

11. Leuchtvorrichtung mit wenigstens einer LED (3), einem LED-Treiber (4, 4') und einem Funktionsmodul mit Funktionsvorrichtungen nach einem der vorhergehenden Ansprüche.

## Claims

1. Functional module (9, 9') with functional devices (51, 52, 6, 7) comprising at least one motion, presence and/or brightness sensor (51, 52), at least one luminaire and/or luminaire driver control device (6) and at least one wireless communication device (7), and which are or can be coupled to at least one LED (3) and/or one LED driver (4, 4'), wherein the functional devices (51, 52, 6, 7) are combined on one single module board (8) to form the functional module (9, 9') which is designed as an SMD or THT component and is designed such that it is suitable for assembling a carrier board (2), wherein the luminaire and/or luminaire driver control device (6) is a microcontroller of the wireless communication device (7).

2. Functional module with functional devices according to claim 1, **characterized in that** the functional module (9, 9') is integrated into an LED driver (4, 4') or an LED driver (4, 4') is a part of the functional module (9, 9').

3. Functional module with functional devices according to claim 1 or 2, **characterized in that** electronic components of the functional module (9), including the at least one luminaire and/or luminaire driver control device (6), are mounted on a back side (B) of the module board (8, 8').

4. Functional module with functional devices according to claim 3, **characterized in that** at least one antenna (7a) of the wireless communication device (7) and/or at least one antenna (52a) of a motion or presence sensor (52) and/or a brightness sensor (51) of the at least one motion, presence and/or brightness sensor (51, 52) is/are arranged on a front side (A) of the module board (8, 8').

5. Functional module with funtional devices according to claim 1 or 2, **characterized in that** all electronic components of the functional module (9), including the at least one luminaire and/or luminaire driver control device (6), are mounted on a front side (A) of the module board (8, 8').

6. Functional module with functional devices according to one of the preceding claims, **characterized in that** the functional module (9, 9') has a module area of at most 10 cm².

7. Functional module with functional devices according to one of the preceding claims, **characterized in that** the microcontroller is connected to the at least one motion, presence and/or brightness sensor (51, 52) and comprises a sensor data processing module.

8. Functional module with functional devices according to one of the preceding claims, **characterized in that** the functional module (9, 9') has no power adapter and no batteries.

9. Functional module with functional devices according to one of the preceding claims, **characterized in that** the at least one motion, presence and/or brightness sensor (51, 52) comprises at least one HF sensor which is designed to emit electromagnetic waves with a frequency of 5.8 GHz, 24 GHz, 61 GHz or 120 GHz.

10. Functional module with functional devices according to one of the preceding claims, **characterized in that** the at least one motion, presence and/or brightness sensor (51, 52) is applied to at least one base board (520) with which the module board (8, 8') is equipped.

11. Lighting device with at least one LED (3), an LED driver (4, 4') and a functional module with functional devices according to one of the preceding claims.

## Revendications

1. Module fonctionnel (9, 9') avec des dispositifs fonctionnels (51, 52, 6, 7) comprenant au moins un capteur de mouvement, de présence et/ou de luminosité (51, 52), au moins un dispositif de commande de luminaire et/ou d'entraînement de luminaire (6) et au moins un dispositif de communication sans fil (7), et qui sont ou peuvent être couplés à au moins une DEL (3) et/ou une commande de DEL (4, 4'), les dispositifs fonctionnels (51, 52, 6, 7) étant combinés sur une seule carte de module (8) pour former un seul module fonctionnel (9, 9') qui est conçu comme un composant CMS ou THT et est conçu de telle sorte qu'il est adapté pour assembler une carte de support (2), le dispositif de commande de luminaire et/ou d'entraînement de luminaire (6) étant un microcontrôleur du dispositif de communication sans fil (7).

2. Module fonctionnel avec des dispositifs fonctionnels selon la revendication 1, **caractérisé en ce que** le module fonctionnel (9, 9') est intégré dans une commande de DEL (4, 4') ou qu'une commande de DEL (4, 4') est un part du module fonctionnel (9, 9').

3. Module fonctionnel avec des dispositifs fonctionnels selon la revendication 1 ou 2, **caractérisé en ce que** des composants électroniques du module fonctionnel (9), y compris au moins un dispositif de commande de luminaire et/ou d'entraînement de luminaire (6), sont montés sur une face arrière (B) de la carte de module (8, 8').

4. Module fonctionnel avec des dispositifs fonctionnels selon la revendication 3, **caractérisé en ce que** au moins une antenne (7a) du dispositif de communication sans fil (7) et/ou au moins une antenne (52a) d'un capteur de mouvement ou de présence (52) et/ou un capteur de luminosité (51) de l'au moins un capteur de mouvement, de présence et/ou de luminosité (51, 52) est/sont disposé(s) sur une face avant (A) de la carte de module (8, 8').

5. Module fonctionnel avec des dispositifs fonctionnels selon la revendication 1 ou 2, **caractérisé en ce que** tous les composants électroniques du module fonctionnel (9), y compris l'au moins un dispositif de commande de luminaire et/ou d'entraînement de luminaire (6), sont montés sur une face avant (A) de la carte de module (8, 8').

6. Module fonctionnel avec des dispositifs fonctionnels selon l'une des revendications précédentes, **caractérisé en ce que** le module fonctionnel (9, 9') présente une surface de module d'au plus 10 cm².

7. Module fonctionnel avec des dispositifs fonctionnels selon l'une des revendications précédentes, **caractérisé en ce que** le microcontrôleur est connecté à l'au moins un capteur de mouvement, de présence et/ou de luminosité (51, 52) et comporte un module de traitement de données de capteur.

8. Module fonctionnel avec des dispositifs fonctionnels selon l'une des revendications précédentes, **caractérisé en ce que** le module fonctionnel (9, 9') est dépourvu d'un bloc d'alimentation et de batteries.

9. Module fonctionnel avec des dispositifs fonctionnels selon l'une des revendications précédentes, **caractérisé en ce que** l'au moins un capteur de mouvement, de présence et/ou de luminosité (51, 52) comporte au moins un capteur RF qui est conçu pour émettre des ondes électromagnétiques d'une fréquence de 5,8 GHz, 24 GHz, 61 GHz ou 120 GHz.

10. Module fonctionnel avec des dispositifs fonctionnels selon l'une des revendications précédentes, **caractérisé en ce que** l'au moins un capteur de mouvement, de présence et/ou de luminosité (51, 52) est appliqué sur au moins une carte de base (520) dont la carte de module (8, 8') est équipée.

11. Dispositif d'éclairage comportant au moins une DEL (3), une commande de DEL (4, 4') et un module fonctionnel avec des dispositifs fonctionnels selon l'une des revendications précédentes.
